# EUROPEAN PATENT APPLICATION

(11) **EP 1 876 823 A1**
(43) Date of publication of application: **09.01.2008**
(21) Application number: 06014120.7
(22) Date of filing: 07.07.2006
(51) Int. Cl.: H04N 7/01

(54) **Video processing device and method for processing videos**

(71) Applicant: MATSUSHITA ELECTRIC INDUSTRIAL CO., LTD, Kadoma-shi, Osaka-fu 571-8501 (JP)
(72) Inventor: Janssen, Frank, 63225 Langen (DE); Maxeiner, Immo, 55270 Zornheim (DE)
(74) Representative: Gerstein, Hans Joachim

(57) **Abstract**

A video processing device (1) for improving a sequence of digital pictures comprises:
- a motion compensation unit (2) provided for calculating additional picture information by use of motion vectors describing the motion of picture elements or picture areas in the sequence of pictures;
- a non-vector based picture processing unit (3) provided for calculating additional picture information without use of motion vectors describing the motion of picture elements;
- a switch for selecting either picture information of the motion compensation unit (2) or of the non-vector based picture processing unit (3) to achieve an improved sequence of pictures; and
- a control unit (5) for controlling the switch.

Said control unit (5) is provided for calculating a global motion information defining a motion characteristic of at least picture area of the picture, and for selecting either the output of the motion compensation unit (2) or the non-vector based picture processing unit (3) as output by use of the switch (4) to achieve an improved picture sequence.

## Description

The invention relates to a video processing device for improving a sequence of digital pictures comprising:
- a motion compensation unit provided for calculating additional picture information by use of motion vectors describing the motion of picture elements or picture areas in the sequence of pictures;
- a non-vector based picture processing unit provided for calculating additional picture information without use of motion vectors describing the motion of picture elements;
- a switch for selecting either picture information of the motion compensation unit or of the non-vector based picture processing unit to achieve an improved sequence of pictures; and
- a control unit for controlling the switch.

The invention further relates to a method for processing videos to improve the quality of a sequence of digital pictures.

Digital signal processing in general and more particular signal processing in modern TV receivers is a well known field of techniques in the prior art. One of the problems in sequences of digital pictures are the visibility of artefacts of vector driven up conversion algorithms and the quality of motion compensated pictures.

Modern TV receivers use frame-rate or interlaced to progressive conversion (IP-conversion) in order to increase the picture quality by adding additional picture information. The missing picture information is calculated based on several input frames. In scenes with high speed motion the quality of the vector information decreases and annoying artefacts become more and more visible. It is known to add an adaptive field processing to the motion compensation algorithm to avoid these artefacts.

The problem of artefacts occur in several picture improvement algorithms, e.g. frame-rate converter, up-conversion, motion compensated up-conversion etc. Especially, artefacts occur in motion compensated up-conversion LSIs from 50 Hz or 60 Hz to higher frequencies (e.g. 60 Hz, 75 Hz, 90 Hz, 100 Hz, 120 Hz, ...).

The basic condition of motion compensation techniques is, that the input frames, which are used for interpolation, have a different motion phase from the same scene in order to calculate the corresponding motion compensated output frame. Moving objects leads to revealed and obscured areas. In these areas a vector information could not be found, because the corresponding picture content does only exists once. This effect leads to wrong vector information especially at object borders. The size of this undefined area is dependent on the speed of the object.

In the prior art, the output pictures is generated out of different processing methods comprising a motion compensation process and an interpolation process. The transition between these different methods is very annoying, because the algorithm is switched between two adjacent pixels. In areas, where the vector information is wrong, especially in scenes with high speed motion, the area with picture disturbances is very large.

It is therefore an object of the present invention to provide an improved video processing device and method for processing videos to improve the quality of the sequence of digital pictures, especially to decrease the visibility of motion compensated artefacts.

The object is achieved by the video processing device comprising the features of the preamble of claim 1 in, that the control unit is provided for calculating a global motion information defining a motion characteristic of at least picture area of the picture, and for selecting either the output of the motion compensation unit or the non-vector based picture processing unit as output by use of the switch to achieve an improved picture sequence.

In contrast to the prior art, where in case of a good vector information the motion compensated pixel is selected and if the vector addressed pixel value does not fit, the interpolated pixel is used, the video processing device according to the present invention provides a motion adaptive switch, where alternative processing is controlled by a global motion information of the picture. Thus, the decision if the output of the motion compensation unit or the non-vector based picture processing unit is used, is made by the motion characteristic of the quality of pixels, rather than by one actual pixel value itself.

The video processing device improves the picture quality of motion compensated pictures in revealed and obscured areas at high speed motion. The switching to the non-vector based picture processing unit avoids the use of wrong vector information used by the motion compensation unit for objects moving at high speed resulting in sufficient picture information. The higher the motion and the bigger the revealed and obscured picture areas are, the effect of the wrong vector information used by the motion compensation unit becomes more and more visible. By use of the global motion information, the switch is controlled to select the non-vector based picture processing unit as source for the improved sequence of digital picture, when the speed of the moving objects and consequently the artefacts becomes to high.

In an improved embodiment, the control unit and/or the switch is provided to compare the global motion information with the defined second threshold. The switch is activated for selecting the output of the non-vector based picture processing unit, when the global motion information exceeds the second threshold.

In a preferred embodiment, the definition of a first threshold being smaller than the value of the second threshold brings some advantages. The control unit and/or switch is provided to further compare the global motion information with the defined first threshold and to activate the switch for reselecting the output of the motion compensation unit at the time the global motion information falls below the first threshold. Said use of the first and second thresholds provides a hysteresis curve for the switch control avoiding the visible switch back from the global processing to the pixel based processing.

The first and/or second threshold are preferably defined as being constant values, but more preferably variable values remaining constant for respective picture or picture set. Then, the first and second threshold values can be varied from picture or picture set to another picture or picture set.

Further, the number of values for the global motion information calculation can be variable.

The first and second threshold may be similar is a suitable embodiment.

The non-vector based picture processing unit can be provided for interpolating pixels of a picture or of at least two pictures succeeding in the sequence of pictures. Thus, the non-vector based picture processing unit is performed by pixel interpolation as it is known in the prior art.

The video processing device may be provided for motion compensated up-conversion of a sequence of pictures in order to increase the picture frequency.

The object is further achieved by the method according to claim 11.

Preferred embodiments are disclosed in the depending claims.

The invention is hereinafter explained by the way of an exemplary embodiment together with the figures. It shows:
- Figure 1 -: block diagram of a video processing device according to a preferred embodiment;
- Figure 2 -: hysteresis curve for controlling the switch in dependence of a global motion information value.

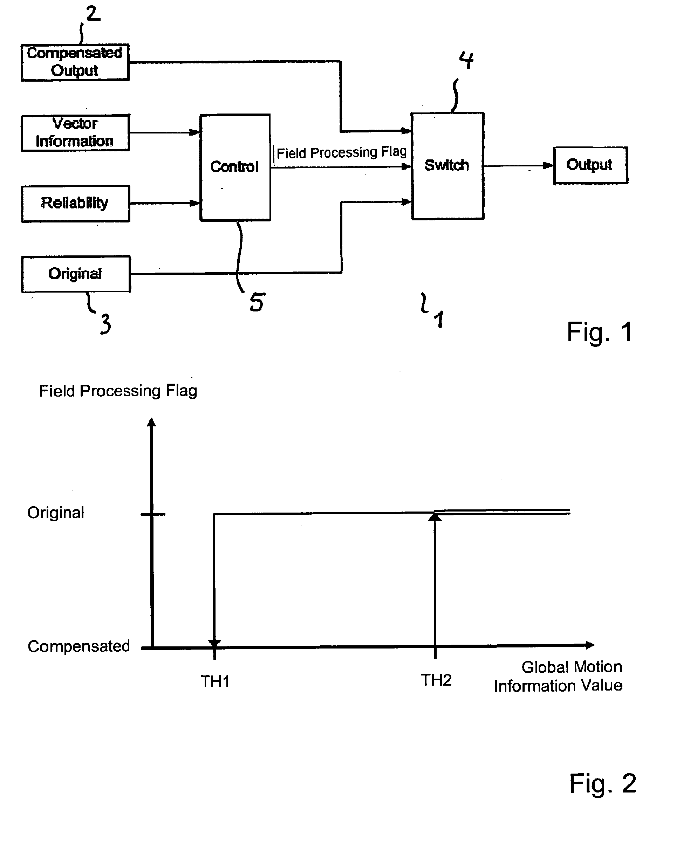

Figure 1 shows a block diagram of a video processing device 1 according to the present invention. A sequence of digital pictures is inputted into a motion compensation unit 2 provided for calculating additional picture information by use of motion vectors describing the motion of picture elements or picture areas in the sequence of pictures. Such a motion compensation unit 2 is well known in the prior art and needs no further explanation.

The motion compensation unit 2 calculates additional picture information from motion information determined from the motion of picture areas or objects in the pictures in succeeding pictures. The motion information is provided in form of motion vectors, wherein the direction of the motion vector indicates the direction of the motion of the picture area or object and wherein the length of the picture vector indicates the speed of the motion.

Further, the sequence of digital pictures is inputted into a non-vector based picture processing unit 3 for the complete picture. The non-vector based picture processing unit 3 can be for example an interpolation unit for interpolating pixels values to obtain additional picture information.

A switch 4 is provided to select either the output of the motion compensation unit 2 or the non-vector based picture processing unit 3 as output for the improved sequence of digital pictures.

The switch 4 is controlled by a field processing flag provided by the control unit 5. The field processing flag is set according to a global motion information value, wherein the global motion information value depends on the global and not the local motion of the respective pictures. The global motion information value may depend on vector information, for example the vector length representing the speed of motion in the picture. Further, the global motion information value may depend on a vector reliability value. Both, the vector information and vector reliability value may be calculated in separate units or may be provided by the motion estimation unit 2.

If the global motion information value is above certain second threshold TH2, the processing is switched by the switch 4 to a non-vector based processing for the complete picture. This processing will continue until the global motion value will be below a first threshold TH1.

Figure 2 shows such a control scheme presented in a hysteresis curve of the field processing flag. It is shown, that at the time the global motion value exceeds the second threshold TH2, which is higher value than the first threshold TH1, the field processing flag is set to switch the output of the video processing device 1 to the output of the non-vector based processing unit 3.

Only after the global motion information value falls back below the first threshold TH1, the switch 4 is controlled to reselect the output of the motion compensation unit as output for the improved sequence of digital pictures. The delay for the switch back to the motion compensation process will avoid the visible switch back from the global processing to the pixel based processing, i.e. the motion compensation. The video processing device may be provided for processing still images, merged pictures in case of telecine material etc.

## Claims

1. Video processing device (1) for improving a sequence of digital pictures comprising:
- a motion compensation unit (2) provided for calculating additional picture information by use of motion vectors describing the motion of picture elements or picture areas in the sequence of pictures;
- a non-vector based picture processing unit (3) provided for calculating additional picture information without use of motion vectors describing the motion of picture elements;
- a switch (4) for selecting either picture information of the motion compensation unit (2) or of the non-vector based picture processing unit (3) to achieve an improved sequence of pictures; and
- a control unit (5) for controlling the switch (4);
**characterized in that**
- said control unit (5) is provided for calculating a global motion information defining a motion characteristic of at least a picture area of the picture, and for selecting either the output of the motion compensation unit (2) or the non-vector based picture processing unit (3) as output by use of the switch to achieve an improved picture sequence.

2. Video processing device (1) according to claim 1, **characterized in that** the control unit (5) and/or the switch (4) is provided to compare the global motion information with a defined second threshold (TH2) and to activate the switch (4) for selecting the output of the non-vector based picture processing unit (3), when the global motion information exceeds the second threshold (TH2).

3. Video processing device (1) according to claim 2, **characterized in that** the control unit (5) and/or the switch (4) is provided to compare the global motion information with a defined first threshold (TH1) and to activate the switch (4) for selecting the output of the motion compensation unit (2), when the global motion information falls below the first threshold (TH1).

4. Video processing device (1) according to claim 3, **characterized in that** the first and second threshold (TH1, TH2) are similar.

5. Video processing device (1) according to claim 4, **characterized in that** the value of the first threshold (TH1) is smaller than the value of the second threshold (TH2).

6. Video processing device (1) according to one of the preceding claims 2 to 5, **characterized in that** the first and/or second threshold (TH2) are variably defined and remain constant for a respective picture or picture set.

7. Video processing device (1) according to one of the preceding claims, **characterized in that** the non-vector based picture processing unit (3) is provided for interpolating pixels of a picture or of at least two pictures succeeding in the sequence of pictures.

8. Video processing device (1) according to one of the preceding claims, **characterized in that** the video processing device (1) is provided for motion compensated up-conversion of a sequence of pictures in order to increase the picture frequency.

9. Video processing device (1) according to one of the preceding claims, **characterized in that** the control unit (5) is provided to determine the global motion information in respect to the length of a vector representing the speed of motion of scenes in succeeding pictures.

10. Video processing device (1) according to one of the preceding claims, **characterized in that** the control unit is provided to determine the global motion information in respect to the reliability of a vector representing the speed of motion of scenes of succeeding pictures.

11. Method for processing videos to improve the quality of a sequence of digital pictures, **characterized by**:
- calculating a global motion information defining a motion characteristic of at least a picture area of the picture and independence of the global motion information
- either calculating additional picture information by use of motion vectors describing the motion of pictures elements of picture area in the sequence of pictures in a motion compensation process,
- or calculating additional picture information without use of motion vectors describing the motion of picture elements in an non-vector based a process
to achieve the improved picture sequence from the output of either the motion compensation process or the non-vector based process.

12. Method according to claim 11, **characterized by** comparing the global motion information to a defined second threshold (TH2) and to select the output of the non-vector based process for the improved picture sequence, when the global motion information exceeds the second threshold (TH2).

13. Method according to claim 12, **characterized by** comparing the global motion information with the defined first threshold (TH1) and selecting the output of the motion compensation process, when the global motion information falls below the first threshold (TH1).

14. Method according to claims 13, **characterized in that** the first and second threshold (TH1, TH2) are similar.

15. Method according to claim 14, **characterized in** defining the value of the first threshold (TH1) as being smaller than the value of the second threshold (TH2).

16. Method according to one of the claims 11 to 15, **characterized by** variedly defining the first and/or second threshold (TH1, TH2) and keeping the first and/or second threshold (TH1, TH2) constant for respective picture or picture set.

17. Method according to one of the claims 11 to 16, **characterized by** interpolating pixels of the picture or of at least two picture succeeding in the sequence of pictures in the non-vector based process.

18. Method according to one of the claims 11 to 18, **characterized by** determining the global motion information in respect to the length of a vector representing the speed of motion of scenes in succeeding pictures.

19. Method according to one of the claims 11 to 18, **characterized by** determining the global motion information in respect to the length the reliability of a vector representing the speed of motion of scenes in succeeding pictures.
